# EUROPEAN PATENT APPLICATION

(11) **EP 4 734 055 A1**
(43) Date of publication of application: **29.04.2026**
(21) Application number: 24209202.1
(22) Date of filing: 28.10.2024
(51) Int. Cl.: G06T 7/246

(54) **EFFICIENTLY MONITORING THE SURGE MOTION OF A MOORED VESSEL**

(71) Applicant: Universiteit Antwerpen, 2000 Antwerpen (BE)
(72) Inventor: Kerstens, Robin, 2020 Antwerpen (BE); Steckel, Jan, 2020 Antwerpen (BE)
(74) Representative: Ipsilon Belgium

(57) **Abstract**

Example embodiments relate to a computer-implemented method for monitoring surge motion (101, 102) of a moored vessel (110) from successive 3D point cloud frames (210, 201, 203) of at least a rear portion of the moored vessel, the computer-implemented method comprising: determining (202), from a first 3D point cloud frame (201), an initial plane (212) indicative for a stern of the moored vessel in an initial position; determining (204), for at least one next 3D point cloud frame (203), a displaced plane (214) indicative for the stern of the moored vessel in a displaced position relative to the initial position as a result of the surge motion; affine transforming (205) the data points of the next 3D point cloud frame associated with the displaced plane onto a normal (213) of the initial plane (212); and determining (206) the surge motion of the moored vessel based on the positions (230) of the affine transformed data points along the normal (213) of the initial plane.

## Description

### Field of the Invention

The present invention generally relates to monitoring the surge motion of a moored vessel.

### Background of the Invention

Moored vessels in a harbour or port move relative to the wharf at which they are moored, e.g. a quay, a dock, or a pier, despite their fixings. Surge motion of a moored vessel refers to the forward and backward oscillatory movement along the longitudinal axis of the vessel, e.g. along a quay wall. This surge motion can result in port inefficiency and potentially dangerous situations for the staff and crew of the vessel and the port. As such, it is important to monitor the surge motion of moored vessels in a reliable manner.

Some existing solutions are based on the pulse-echo principle to monitor distance over time between a sensor and a single point on the stern of the vessel, e.g. by RADAR or SONAR. This has the problem that an angular error is introduced as the sensor is typically placed on a wharf structure facing the stern at an angle that changes as the vessel moves. Moreover, if the angle becomes too large, information loss can occur due to specular reflections of the measuring pulse. These solutions are further prone to errors due to sub-optimal placement of the sensors.

LiDAR measurements can be used to mitigate these problems. The large amount of 3D data points collected by a LiDAR sensor are typically used to generate, and regularly update, a 3D model of the moored vessel. The surge motion of the vessel can then be determined based on the displacement of the 3D vessel model over time. This has the problem that it is computationally costly to generate and update the model. It is a further problem that computationally complex 3D pose estimation algorithms are required to determine the surge motion from the vessel model. As such, it remains computationally costly and energy intensive to determine the surge motion of a moored vessel based on 3D point clouds.

### Summary of the Invention

It is an object of the present invention, amongst others, to solve or alleviate the above identified problems and challenges by improving the efficiency of monitoring the surge motion of a moored vessel based on 3D point clouds of the moored vessel.

According to a first aspect, this object is achieved by a computer-implemented method for monitoring surge motion of a moored vessel from successive 3D point cloud frames of at least a rear portion of the moored vessel, the computer-implemented method comprising:
- determining, from a first 3D point cloud frame, an initial plane indicative for a stern of the moored vessel in an initial position;
- determining, for at least one next 3D point cloud frame, a displaced plane indicative for the stern of the moored vessel in a displaced position relative to the initial position as a result of the surge motion;
- affine transforming the data points of the next 3D point cloud frame associated with the displaced plane onto a normal of the initial plane; and
- determining the surge motion of the moored vessel based on the positions of the affine transformed data points along the normal of the initial plane.

The successive 3D point cloud frames refer to sequential sets of 3D spatial data points captured over time by a 3D imaging sensor, e.g. a LiDAR sensor, a stereo camera, or a depth sensor. The respective 3D point cloud frames may thus represent a snapshot of a set of data points of the moored vessel in space, wherein the location of each data point is characterised by coordinates. The set of data points comprise at least a rear portion of the moored vessel, i.e. the stern of the moored vessel. The set of data points may thus also comprise a portion of a side of the moored vessel, e.g. the inboard side or dockside facing a wharf. This can, for example, be achieved by placing a 3D imaging sensor on a wharf at which the vessel is moored such that the 3D imaging sensor is directed to the rear portion of the moored vessel.

From these respective successive 3D point cloud frames, planes are determined that are indicative for the stern of the moored vessel in respective positions. In other words, the stern of the moored vessel is identified within the 3D point clouds. As the vessel moves oscillatory along its longitudinal axis while being moored, the relative displacement between the successively determined stern planes is indicative for the surge motion of the moored vessel.

To determine this surge motion, i.e. to quantify the surge motion, the data points associated with the respectively determined displaced planes are affine transformed onto the normal of the initial plane. The initial plane thus serves as a reference position of the stern, i.e. an initial position of the stern when the computer-implemented method is initiated. The distributed position of these affine transformed data points along the normal of the initial plane then allows determining the surge motion of the moored vessel relative to the initial position.

This allows accurately monitoring the surge motion of a moored vessel without generating and regularly updating a computationally heavy 3D model of the vessel, and without performing computationally complex 3D pose estimation algorithms. This has the advantage that it improves the computational efficiency and reduces the energy consumption of determining the surge motion of a moored vessel based on 3D point clouds. By determining the initial plane and displaced plane based on a plurality of spatial data points, the introduction of an angular error can also be avoided. The computer-implemented method is more robust to sub-optimal placement of a 3D imaging sensor for obtaining the successive 3D point cloud frames, as it can accurately determine the surge motion as long as a portion of the stern is included within the 3D point cloud frames. It is an advantage that the surge motion can be determined without boarding the moored vessel, as this may be exacerbated by boarding regulations and maritime law, or by medical circumstances resulting in quarantined anchorage of the vessel. The more accurate and reliable determination of the surge motion of moored vessels may further improve the safety in ports and harbours.

According to an example embodiment, determining the surge motion of the moored vessel further may comprise determining a statistical representative position of the affine transformed data points along the normal of the initial plane; and determining the surge motion as the difference between the statistical representative position and the foot of the normal of the initial plane.

The statistical representative position may be any measure that summarizes or represents the distributed position of the affine transformed data points along the normal of the initial plane in a single value. The statistical representative position may, for example, be a median position of the affine transformed data points along the normal of the initial plane, an average position of the affine transformed data points along the normal of the initial plane, or a percentile of the affine transformed data points along the normal of the initial plane. The foot of the normal of the initial plane may refer to the point where the normal intersects the initial plane.

According to an example embodiment, determining the initial plane and determining the displaced plane may comprise fitting a plane to a maximum number of data points within the first 3D point cloud frame and the next 3D point cloud frame, respectively.

The successive 3D point cloud frames comprise a rear portion of the moored vessel, e.g. by directing a 3D imaging sensor to the rear portion of the moored vessel. As such, the plane that can be fit to the largest amount of data points within the successive 3D point cloud frames is most probably indicative for the stern of the moored vessel. This allows determining the displaced plane and the initial plane in a computationally efficient way.

According to an example embodiment, determining the initial plane and determining the displaced plane may be performed by means of a random sample consensus, RANSAC, algorithm.

According to an example embodiment, the computer-implemented method may further comprise verifying whether the determined initial plane is indicative for the stern of the moored vessel based on the orientation of the normal of the determined initial plane; and/or verifying whether the determined displaced plane is indicative for the stern of the moored vessel based on the orientation of the normal of the determined displaced plane.

Thus, after determining the initial plane or displaced plane, the normal of said plane may be determined. A certain orientation of the normals may be expected depending on the placement of the 3D imaging sensor relative to the moored vessel, as the 3D imaging sensor remains stationary during execution of the computer-implemented method. For example, the 3D imaging sensor may be placed on a wharf at which the vessel is moored such that the sensor is directed to the corner of the vessel between the stern and the inboard side. As such, the normal of the initial plane and the normal of any displaced plane should be oriented within the third quadrant of the horizontal plane, i.e. the ground plane or XY plane in a typical 3D geospatial XYZ coordinate system. This allows improving the probability that the determined initial plane and/or the determined displaced plane are in fact indicative of the stern. This has the advantage that it improves the reliability of the determined surge motion in a computationally efficient way.

According to an example embodiment, the computer-implemented method may further comprise rejecting the determined initial plane if it is not indicative for the stern of the moored vessel and determining another initial plane; and/or rejecting the determined displaced plane if it is not indicative for the stern of the moored vessel and determining another displaced plane.

In other words, if a candidate initial plane or a candidate displaced plane is not indicative for the stern of the moored vessel, a new candidate initial plane or a new candidate displace plane may be determined. This allows further improving the probability that the determined initial plane and/or the determined displaced plane are in fact indicative of the stern, i.e. that the stern is being tracked and not the side of the vessel. This has the advantage that it further improves the reliability of the determined surge motion in a computationally efficient way.

According to an example embodiment, the computer-implemented method may comprise rejecting the determined displaced plane if it comprises less than a threshold number of data points and determining another displaced plane.

In other words, if a candidate displaced plane does not comprise sufficient data points, a new candidate displaced plane may be determined. This allows further improving the probability that the determined displaced plane is in fact indicative of the stern. This has the advantage that it further improves the reliability of the determined surge motion in a computationally efficient way.

According to an example embodiment, the computer-implemented method may further comprise determining the threshold number of data points based on the number of data points associated with the initial plane.

The threshold number of data points may be determined during an initialization step or procedure. The threshold number of data points may be a predetermined percentile of the data points associated with the initial plane, e.g. 50% of the number of data points to which the initial plane is fitted.

According to an example embodiment, the computer-implemented method may further comprise normalizing the data points of the displaced plane relative to a reference point located on the initial plane.

The reference point may be a random point associated with the initial plane. The reference point may be selected from the data points of the initial plane during the initialization step or procedure. The normalizing may comprise determining, for the respective data points of the displaced plane, the change in position between a vector of the respective data points and a vector of the reference point. In other words, the normalizing may comprise determining the displacement vector for the respective data points relative to the reference point. The normalizing may be performed before affine transforming the data points associated with the displaced plane onto the normal of the initial plane. As such, the normalized data points of the displaced plane may be affine transformed onto the normal of the initial plane.

According to an example embodiment, the computer-implemented method may further comprise transmitting the determined surge motion to a port management system.

This can allow accurate monitoring of a plurality of moored vessels in substantially real-time, as the computational complexity of determining the surge motion is limited. The port management system may further provide a warning if an unsafe surge motion is determined or may warn a vessel to improve its fixings to reduce surge motion.

According to an example embodiment, the computer-implemented method may further comprise, for successive 3D point cloud frames, repeatedly performing the determining of a displaced plane, the affine transforming of the data points associated with the displaced plane, and the determining of the surge motion.

This allows monitoring the surge motion of a moored vessel locally and in substantially real-time, as the computational complexity is limited.

According to a second aspect, the disclosure relates to a method for monitoring surge motion of a moored vessel from successive 3D point cloud frames of at least a rear portion of the moored vessel, the method comprising:
- placing a 3D imaging sensor on a wharf at which the vessel is moored such that the 3D imaging sensor is directed to a rear portion of the moored vessel; wherein the 3D imaging sensor is configured to obtain successive 3D point cloud frames; and
- determining the surge motion of the moored vessel based on the successive 3D point cloud frames obtained by the 3D imaging sensor by performing the computer-implemented method according to the first aspect.

According to a third aspect, the disclosure relates to a data processing system configured to perform the computer implemented method according to the first aspect.

According to a fourth aspect, the disclosure relates to a computer program comprising instructions which, when the program is executed by a computer, cause the computer to perform the computer implemented method according to the first aspect.

According to a fifth aspect, the disclosure relates to a computer-readable medium comprising instructions which, when executed by a computer, cause the computer to perform the computer implemented method according to the first aspect.

According to a sixth aspect, the disclosure relates to a surge motion monitoring device configured to monitor surge motion of a moored vessel from successive 3D point cloud frames of at least a rear portion of the moored vessel, the device comprising:
- a 3D imaging sensor configured to obtain the successive 3D point cloud frames of at least a rear portion of a moored vessel; and
- a control unit configured to perform the computer-implemented method according to the first aspect.

### Brief Description of the Drawings

Fig. 1 shows an example of a moored vessel that is subject to surge motion;
Fig. 2 shows steps of a computer-implemented method for monitoring the surge motion of a moored vessel from successive 3D point clouds frames, according to embodiments;
Fig. 3 shows details of the affine transforming step performed within the computer-implemented method, according to embodiments;
Fig. 4 shows further steps of the computer-implemented method for monitoring the surge motion of a moored vessel from successive 3D point clouds frames, according to embodiments;
Fig. 5A shows an example embodiment of a surge motion monitoring device configured to monitor surge motion of a moored vessel from successive 3D point cloud frames; and
Fig. 5B shows an example embodiment of a suitable computing system for performing steps according to example aspects of the disclosure.

### Detailed Description of Embodiment(s)

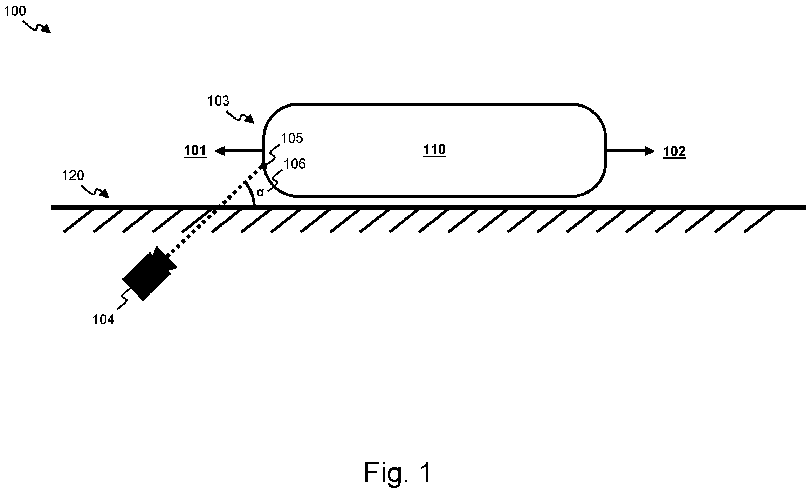

Fig. 1 shows an example of a vessel 110 that is moored at a wharf 120. The moored vessel 110 may be any vessel which is anchored, tied, or otherwise fixed to a stationary structure of the wharf 120 such as, for example, a cargo ship, an oil tanker, a ferry, a fishing boat, a yacht, a cruise ship, a navy vessel, a barge, or a houseboat. The wharf 120 is a structure built along the edge of a body of water designed for the loading, unloading, boarding, or disembarking of ships and vessels. Wharf 120 may, for example, be a quay, a dock, or a pier. The wharf 120 thus provides a platform or area for the transfer of goods and passengers between the vessel 110 and the mainland. The wharf 120 may comprise one or more structures for anchoring, tying, or otherwise fixing a vessel to, e.g. a bollard. Such a structure may further be referred to as an anchoring structure.

A moored vessel 110 moves relative to the wharf 120 at which it is moored despite its fixings to one or more anchoring structures. Surge motion of a moored vessel refers to the forward 102 and backward 101 oscillatory movement of the vessel 110 along its longitudinal axis, e.g. along wharf 120. Surge motion 101, 102 is the result of several factors that may interact in a complex way such as, for example, waves, ocean swells, wind forces, gusts, currents, tidal effects, and nearby passing of other vessels. Surge motion 101, 102 is typically undesirable in moored vessels as it can result in port inefficiency and potentially dangerous situations for the staff and crew of the vessel 110 and the port. Port inefficiency may refer to any disruption or reduction in a port's operational capacity due to the surge motion, e.g. delays in cargo handling. As such, it is important to monitor the surge motion 101, 102 of moored vessels 110 in a reliable manner.

Some existing solutions are based on the pulse-echo principle to monitor distance over time between a sensor 104 and a single point 105 on the stern 103 of the vessel 110, e.g. by RADAR or SONAR. This has the problem that an angular error is introduced as the sensor 104 is typically placed on the wharf 120 facing the stern 103 at an angle α 106 that changes as the vessel 110 moves 101, 102. Moreover, if the angle 106 becomes too large, information loss can occur due to specular reflections of the measuring pulse emitted by sensor 104. These solutions are further prone to errors due to sub-optimal placement of the sensor 104.

LiDAR measurements of the moored vessel 110 can be used to mitigate these problems. The large amount of 3D data points collected by a LiDAR sensor are typically used to generate, and regularly update, a 3D model of the moored vessel 110. The surge motion 101, 102 of the vessel 110 can then be determined based on the displacement of the 3D vessel model over time. This has the problem that a computationally heavy model of the vessel is generated and updated regularly. It is a further problem that computationally complex 3D pose estimation algorithms are required to determine the surge motion from the vessel model. This makes it computationally costly and energy intensive to determine the surge motion of a moored vessel based on 3D point clouds.

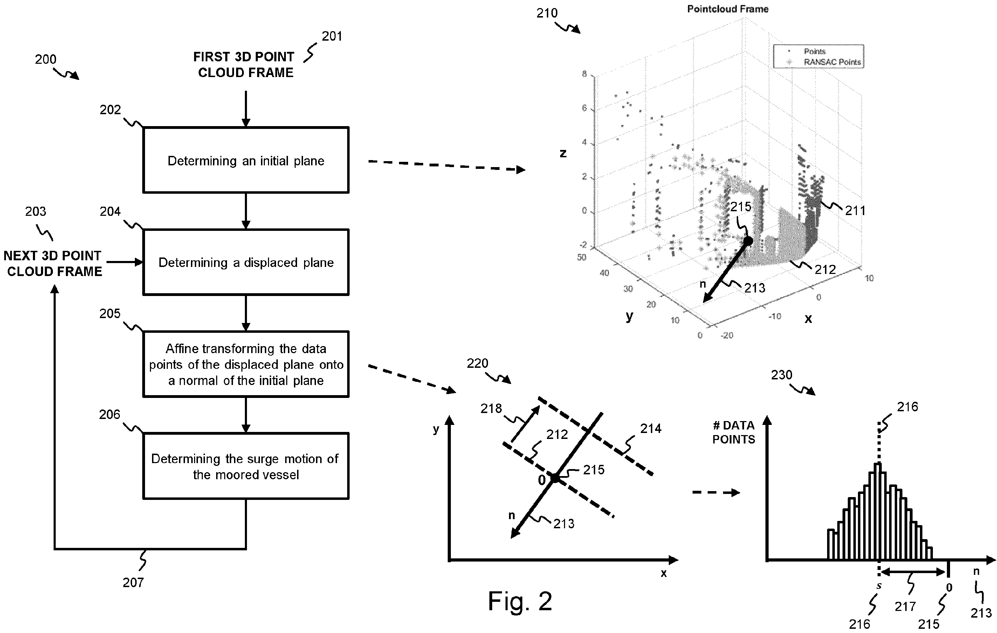

Fig. 2 shows steps 200 of a computer-implemented method for monitoring the surge motion of a moored vessel from successive 3D point clouds frames 210, 201, 203 in a computationally efficient way, according to embodiments of the present disclosure.

Successive 3D point cloud frames 210, 201, 203 refer to sequential sets of 3D spatial data points 210 captured over time. This can be achieved by any 3D imaging sensor configured to obtain a 3D point cloud such as, for example, a LiDAR sensor, a stereo camera, or a depth sensor. Such a 3D imaging sensor can be placed on the wharf at which the vessel is moored such that the sensor is directed to the rear portion of the moored vessel at an angle. As such, the 3D spatial data points 210 of the respective 3D point cloud frames 201, 203 comprise at least a rear portion of the moored vessel, i.e. the stern of the moored vessel. The set of data points 210 may thus also comprise a portion of a side 211 of the moored vessel, e.g. the inboard side or dockside facing the wharf. The respective 3D point cloud frames 201, 203 may thus represent a snapshot of a set of data points 210 of the moored vessel in space, wherein the location of each data point is characterised by coordinates in a coordinate system.

In a first step 202, an initial plane 212 is determined from a first 3D point cloud frame 201. The determined initial plane 212 is indicative for the stern of the moored vessel in an initial position, i.e. a reference position of the moored vessel relative to which the surge motion is determined. The first 3D point cloud frame 201 is a 3D point cloud frame that is processed by the computer-implemented method during an initialization step or calibration procedure. It will be apparent that the first 3D point cloud frame 201 may be any frame within a set of successively that is used for initializing the computer-implemented method by determining a reference point for monitoring the surge motion, i.e. the initial plane 212. The first frame 201 may thus be the actual first frame obtained by a 3D imaging sensor, e.g. upon powering on the 3D imaging sensor. Alternatively, the first frame 201 may be a later frame obtained by the 3D imaging sensor.

Determining the initial plane 212 may be achieved by fitting a plane to a maximum number of data points within the first 3D point cloud frame 201. The 3D point cloud frame 210 comprises at least a rear portion of the moored vessel, e.g. by directing the 3D imaging sensor to the rear portion of the moored vessel at an angle. As such, it can be assumed that a larger number of data points within the point cloud 210 are located on the stern of the moored vessel compared to, for example, the inboard side 211 of the moored vessel. Thus, the plane that can be fit to the largest amount of data points within the 3D point cloud frame 210 is most probably indicative for the stern of the moored vessel. Identifying this plane may be achieved by means of a random sample consensus, RANSAC, algorithm. This allows determining the initial plane 212 in a computationally efficient way.

In a next step 204, a displaced plane 214 is determined for at least one next 3D point cloud frame 203, i.e. a 3D point cloud frame following the first 3D point cloud frame 201 in time. The displaced plane 214 may be determined in substantially the same way as the initial plane 212. The displaced plane 214 is indicative for the stern of the moored vessel in a displaced position relative to the initial position of the initial plane 212 as a result of the surge motion. In other words, the displaced plane 214 corresponds to the initial plane 212 that has been displaced 218 forward or backward along the longitudinal axis of the moored vessel by surge motion. As the longitudinal axis of the vessel is perpendicular to its stern, the longitudinal axis is also substantially perpendicular to the initial plane 212. As such, the surge motion displaces the stern along the normal vector 213 of the initial plane 212. This is illustrated in Fig. 2 as a 2D top perspective view 220 of the initial plane 212 and the displaced plane 214, which corresponds to the horizontal X-Y plane of the 3D point cloud frames 210. It will be apparent that the displaced plane 214 may substantially coincide with the initial plane 212 if no surge motion occurred or if, by chance, the oscillating movement of the surge motion returned the moored vessel to its initial position at the moment in time the next 3D point cloud frame is recorded.

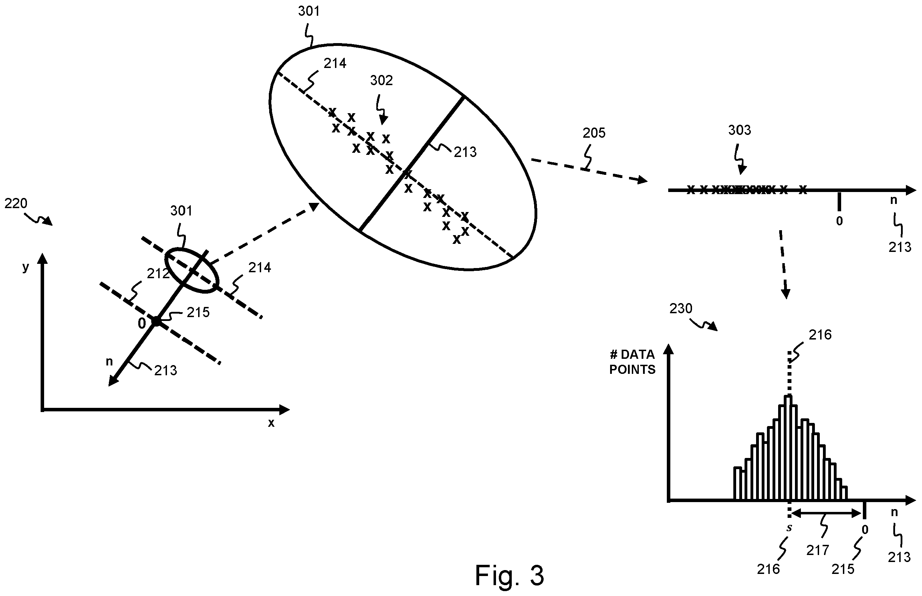

In a following step 205, the data points of the next 3D point cloud frame 203 associated with the displaced plane 214 are affine transformed onto the normal 213 of the initial plane 212. The data points of the next frame 203 associated with the displaced plane 214 may refer to the data points of the point cloud to which the displaced plane 214 was fitted in step 204. An affine transformation is a geometric transformation that preserves relationships between geometric objects but does not preserve angles or distances between those objects. Affine transforming may include rotating, scaling, shearing, translating, or a combination thereof. The affine transforming of step 205 is further illustrated in Fig. 3.

Fig. 3 shows a magnified portion 301 of the 2D top perspective view 220 where the normal 213 of the initial plane 212 intersects with the displaced plane 214. The magnified portion 301 shows the data points 302 (illustrated as `X') associated with the displaced plane 214, i.e. the data points 302 to which the displaced plane 214 was fitted. As the displaced plane 214 is fitted to these data points 302, the data points 302 are not all located on the surface of the displaced plane 214. As such, affine transforming 205 the data points 302 onto normal 213 results in a distribution of the affine transformed data points 303 along the normal 213 of the initial plane 212. This distribution along the normal 213 is further illustrated by histogram 230, which shows the amount of affine transformed data points 303 located at specified positions along the normal 213 relative to the foot 215 of the normal. The foot 215 of the normal 213 of the initial plane 212 may refer to the point where the normal 213 intersects the initial plane 212. This distribution 230 of the affine transformed data points' positions is thus indicative for the displacement of the displaced plane 214 along the normal 213 relative to the initial plane 212, i.e. indicative for the surge motion of the moored vessel.

Returning to Fig. 2, the surge motion of the moored vessel is determined based on this distributed position 230 of the affine transformed data points in step 206. This may further comprise determining a statistical representative position 216 of the affine transformed data points 230 along the normal 213 of the initial plane 212. The statistical representative position 216 may be any measure that summarizes or represents the position distribution 230 of the affine transformed data points along the normal 213 of the initial plane 212 in a single value. The statistical representative position 216 may, for example, be a median position of the affine transformed data points along the normal of the initial plane, an average position of the affine transformed data points along the normal of the initial plane, or a percentile of the affine transformed data points along the normal of the initial plane. The surge motion of the moored vessel may then be determined as the difference 217 between the statistical representative position 216 and the foot 215 of the normal 213 of the initial plane 212.

Steps 204, 205, and 206 may repeatedly be performed 207 for successive 3D point cloud frames obtained by the 3D imaging sensor. In other words, for respective next 3D point cloud frames obtained by the 3D imaging sensor, the displaced plane 214 may be determined in step 204, the associated data points may be transformed onto normal 213 in step 205, and the surge motion may be determined in step 206. In doing so, the relative displacement of the moored vessel's stern along normal 213 relative to its initial position can be tracked in time. It will be apparent that the computer-implemented method may perform steps 204 - 206 for each 3D point cloud frame but doesn't have to. In other words, the computer-implemented method may skip one or more 3D point cloud frames obtained from a 3D imaging sensor. This can allow balancing the granularity of the monitored surge motion with the computational load.

The computer-implemented method allows accurately monitoring the surge motion of a moored vessel without generating and regularly updating a computationally heavy 3D model of the vessel, and without performing computationally complex 3D pose estimation algorithms. This has the advantage that it improves the computational efficiency and reduces the energy consumption of determining the surge motion of a moored vessel based on 3D point clouds. By determining the initial plane and displaced plane based on a plurality of spatial data points, the introduction of an angular error can also be avoided. The computer-implemented method is more robust to sub-optimal placement of a 3D imaging sensor for obtaining the successive 3D point cloud frames, as it can accurately determine the surge motion as long as a portion of the stern is included within the 3D point cloud frames. It is an advantage that the surge motion can be determined without boarding the moored vessel, as this may be exacerbated by boarding regulations and maritime law, or by medical circumstances resulting in quarantined anchorage of the vessel. The more accurate and reliable determination of the surge motion of moored vessels may further improve the safety in ports and harbours.

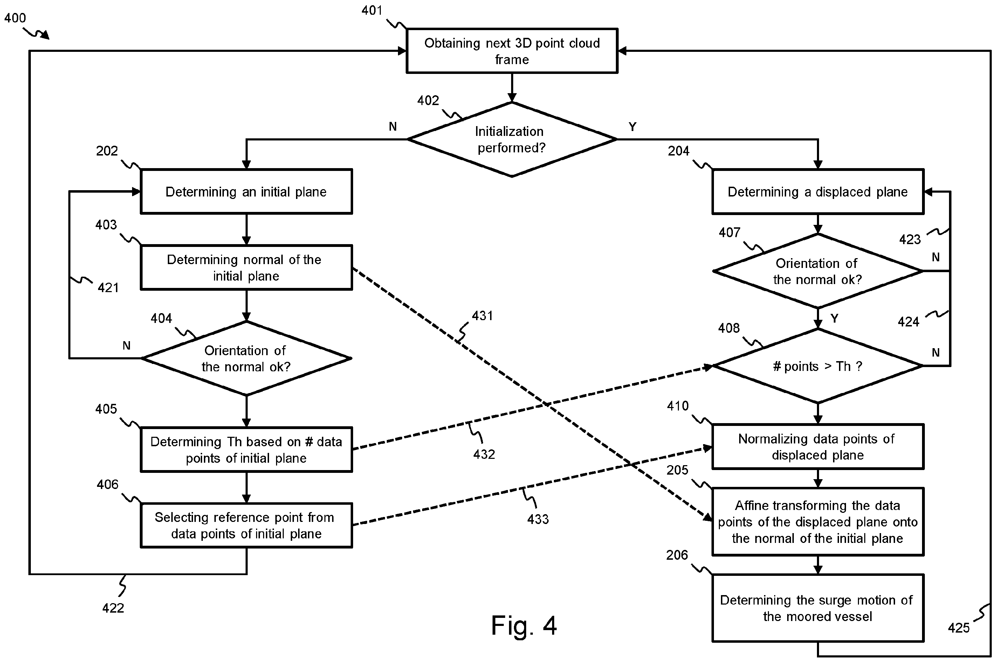

Fig. 4 shows further steps 400 of the computer-implemented method for monitoring the surge motion of a moored vessel from successive 3D point cloud frames, according to example embodiments.

In a first step 401, a next 3D point cloud frame may be obtained. The 3D point cloud frame may be obtained from a 3D imaging sensor. To this end, the 3D imaging sensor may be placed on a wharf at which the vessel is moored such that the 3D imaging sensor is directed to a rear portion of the moored vessel. The 3D imaging sensor may be directed to a corner of the moored vessel's stern closest to the wharf. In a following step 402, it is evaluated whether initialization has previously been performed. If this is not the case, an initialization procedure may be performed on the obtained 3D point cloud frame in steps 202, 403, 404, 405, 406. It will be apparent that this obtained 3D point cloud frame is referred to as the 'first' 3D point cloud frame throughout the present disclosure.

As a first step 202 in the initialization procedure, the initial plane indicative for the stern of the moored vessel in an initial position may be determined as described in relation to Fig. 2 and Fig. 3. Thereafter, in step 404, the initialization procedure may comprise verifying whether the determined initial plane in step 202 is indicative for the stern of the moored vessel. This can be achieved based on the orientation of the normal of the determined initial plane. As such, in step 403, the normal of the determined initial plane may be determined. The normal of the initial plane may further be kept or stored in memory for further use during the operational phase of the computer-implemented method, i.e. during step 205. This is illustrated by arrow 431.

A certain orientation of the normal may be expected depending on the placement of the 3D imaging sensor relative to the moored vessel, as the 3D imaging sensor remains stationary during execution of the computer-implemented method. For example, if the 3D imaging sensor is directed to the corner of the vessel between the stern and the inboard side, the normal of the initial plane should be oriented within the third quadrant of the horizontal plane, i.e. the ground plane or XY plane in a typical 3D geospatial XYZ coordinate system.

If the orientation of the initial plane's normal is not as expected based on the placement of the 3D imaging sensor relative to the moored vessel, the initial plane determined in step 202 may be rejected and a new initial plane may be determined. In other words, if it is unlikely that a candidate initial plane determined in step 202 is indicative for the stern of the moored vessel, a new candidate initial plane may be determined that is more likely indicative for the stern. To this end, the initialization procedure may return 421 to step 202 and repeat steps 202, 403, 404 until a suitable initial plane is determined. Alternatively or complementary, the initialization procedure may be interrupted by returning to step 401 to wait for a next 3D point cloud frame, e.g. when no suitable initial plane has been found after a predetermined number of iterations. If the orientation of the initial plane's normal is as expected based on the placement of the 3D imaging sensor relative to the moored vessel, the candidate initial plane may be accepted, and the initialization procedure may proceed to step 405. This allows improving the probability that the determined initial plane is in fact indicative of the stern, i.e. that the stern is being tracked and not the side of the vessel. This has the advantage that it improves the reliability of the determined surge motion in a computationally efficient way.

In step 405, a threshold number of data points may be determined based on the accepted initial plane. The threshold number of data points may be a predetermined percentile of the data points associated with the initial plane, i.e. the data points to which the initial plane is fitted. The threshold number may, for example, correspond to 50% of the number of the data points associated with the initial plane. Thus, if the initial plane has been fitted to 600 data points out of 1000 data points within the 3D point cloud frame, the threshold number of data points may be determined to be 300. The determined threshold number may further be kept or stored in memory for further use during the operational phase of the computer-implemented method, i.e. during step 408. This is illustrated by arrow 432.

In a following step 406, a reference point may be selected from the data points associated with the initial plane, i.e. the data points to which the initial plane is fitted. The reference point may be a random point associated with the initial plane, e.g. a random point located on the surface of the initial plane. The determined reference point may further be kept or stored in memory for further use during the operational phase of the computer-implemented method, i.e. during step 410. This is illustrated by arrow 433.

After completing the initialization procedure, the computer-implemented method may return 422 to step 401 to obtain a next 3D point cloud frame. As the initialization has been performed, the computer-implemented method may proceed to the operational phase, i.e. steps 204, 407, 408, 410, 205, 206, when obtaining a next 3D point cloud frame.

In a first step 204 of the operational phase, a displaced plane may be determined as described in relation to Fig. 2 and Fig. 3. Similarly to the initial plane, a certain orientation of the displaced plane's normal may be expected depending on the placement of the 3D imaging sensor relative to the moored vessel, as discussed above in relation to step 404. As such, a verification of the orientation of the normal of the candidate displaced plane may be performed in step 407 to check whether the determined displaced plane can be indicative of the stern, similar to step 404. To this end, the normal of the determined displaced plane may be determined (not shown in Fig. 4).

If the orientation of the displaced plane's normal is not as expected based on the placement of the 3D imaging sensor relative to the moored vessel, the displaced plane determined in step 204 may be rejected and a new displaced plane may be determined. In other words, if it is unlikely that a candidate displaced plane determined in step 204 is indicative for the stern of the moored vessel, a new candidate displaced plane may be determined that is more likely indicative for the stern. To this end, the computer-implemented method may keep returning 423 to step 204 until a suitable displaced plane is determined. Alternatively or complementary, the operational phase may be interrupted by returning to step 401 to wait for a next 3D point cloud frame, e.g. when no suitable displaced plane has been found after a predetermined number of iterations. If the orientation of the displaced plane's normal is as expected based on the placement of the 3D imaging sensor relative to the moored vessel in step 407, the computer-implemented method may proceed to step 408. This allows improving the probability that the determined displaced plane is in fact indicative of the stern, i.e. that the stern is being tracked and not the side of the vessel. This has the advantage that it improves the reliability of the determined surge motion in a computationally efficient way.

In step 408, the determined displaced plane may further be rejected if it comprises less than the threshold number of data points determined during the initialization procedure, i.e. in step 405. In other words, if a candidate displaced plane is not fitted to sufficient data points in step 408, a new candidate displaced plane may be determined by returning 424 to step 204. If the determined displaced plane comprises at least the threshold number of data points, the candidate displaced plane may be accepted and the computer-implemented method may proceed to step 410. This allows further improving the probability that the determined displaced plane is in fact indicative of the stern.

In a following step 410, the data points of the displaced plane may further be normalized relative to the reference point selected during step 406. This can be achieved by determining, for the respective data points of the displaced plane, the change in position between a vector of the respective data points and a vector of the reference point. In other words, the normalizing may comprise determining the displacement vector for the respective data points relative to the reference point.

In a following step 205, the normalized data points of the displaced plane may be affine transformed onto the normal of the initial plane, as described in relation to Fig. 2 and Fig. 3. The surge motion may then be determined based on the positions of the affine transformed data points along the normal of the initial plane in step 206, as described in relation to Fig. 2 and Fig. 3. The determined surge motion may further be transmitted to a port management system (not shown in Fig. 4). This completes one iteration of the operational phase.

The computer-implemented method may then return 425 to step 401 to obtain a next 3D point cloud frame. The operational phase may be repeated on the next 3D point cloud frame by performing steps 204, 407, 408, 410, 205, 206 again. In doing so, the relative displacement of the moored vessel's stern relative to its initial position can be tracked in time. It will be apparent that the computer-implemented method may perform steps 204, 407, 408, 410, 205, 206 for each 3D point cloud frame but doesn't have to. In other words, the computer-implemented method may skip one or more 3D point cloud frames obtained from a 3D imaging sensor. This can allow balancing the granularity of the monitored surge motion with the computational load.

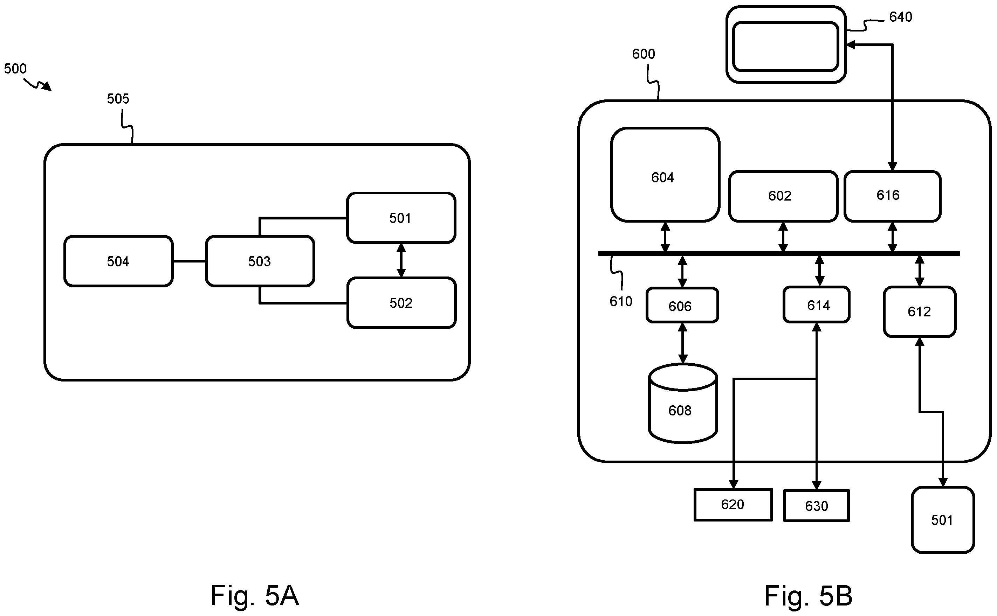

Fig. 5A shows an example embodiment of a surge motion monitoring device 500 configured to monitor the surge motion of a moored vessel from successive 3D point cloud frames of at least a rear portion of the moored vessel. The device 500 comprises a 3D imaging sensor 501 configured to obtain the successive 3D point cloud frames of at least a rear portion of the moored vessel. The 3D imaging sensor 501 may, for example, be a LiDAR sensor, a stereo camera, or a depth sensor. Preferably, the 3D imaging sensor 501 may be a solid-state LiDAR scanner. The 3D imaging sensor 501 may preferably be waterproof and may preferably have an application range of at least about 75 meters. The surge motion monitoring device 500 further comprises a control unit 502 configured to perform the computer-implemented method for monitoring the surge motion as discussed in relation to Figs. 2 - 4. As the surge motion can be determined with limited energy consumption by the low computational complexity and cost of the computer-implemented method, the surge motion monitoring device 500 can be battery powered. To this end, the surge motion monitoring device 500 may further comprise a battery 503 configured to power at least the 3D imaging sensor 501 and the control unit 502. This has the advantage that the device 500 is portable and able to operate without power cables.

The surge motion monitoring device 500 may further comprise a wireless connection module 504 configured to communicate over a wireless telecommunication network, e.g. 4G, by means of an antenna. This may, for example, allow transmitting the determined surge motion to a port management system. The surge motion monitoring device 500 may further comprise one or more fastening means (not shown in Fig. 5A) configured to releasably fix the device 500 to a structure of the wharf. The one or more fastening means may preferably be magnetic fastening means configured to releasably fix the device 500 to a metallic structure of a wharf. The one or more magnetic fastening means may, for example, be permanent Neodymium magnets. The one or more magnetic fastening means may, for example, hold the device 500 in place on a bollard of the wharf. The surge motion monitoring device 500 may further comprise a housing 505 made of a material that is substantially resistant to UV-radiation, water damage, and mechanical impacts. Such a material may, for example, be nylon comprising micro carbon fibre. The surge motion monitoring device 500 may further comprise at least one ergonomic handle (not shown in Fig. 5A) configured to be gripped by a human operator. This allows easily transporting and positioning the device 500.

Fig. 5B shows a suitable computing system 600 enabling to implement embodiments of the above described computer-implemented method. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems such as for example, amongst others, a 3D imaging sensor 501. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, -ROM disk, solid state drives, flash memory cards, etc. could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for monitoring surge motion (101, 102) of a moored vessel (110) from successive 3D point cloud frames (210, 201, 203) of at least a rear portion of the moored vessel, the computer-implemented method comprising:
- determining (202), from a first 3D point cloud frame (201), an initial plane (212) indicative for a stern of the moored vessel in an initial position;
- determining (204), for at least one next 3D point cloud frame (203), a displaced plane (214) indicative for the stern of the moored vessel in a displaced position relative to the initial position as a result of the surge motion;
- affine transforming (205) the data points of the next 3D point cloud frame associated with the displaced plane onto a normal (213) of the initial plane (212); and
- determining (206) the surge motion of the moored vessel based on the positions (230) of the affine transformed data points along the normal (213) of the initial plane.

2. The computer-implemented method according to any of the preceding claims, wherein determining (206) the surge motion of the moored vessel further comprises determining a statistical representative position (216) of the affine transformed data points along the normal (213) of the initial plane (212); and determining the surge motion as the difference (217) between the statistical representative position (216) and the foot (215) of the normal of the initial plane.

3. The computer-implemented method according to any of the preceding claims, wherein determining (202) the initial plane (212) and determining (204) the displaced plane (214) comprise fitting a plane to a maximum number of data points within the first 3D point cloud frame (201) and the next 3D point cloud frame (203), respectively.

4. The computer-implemented method according to claim 3, wherein determining (202) the initial plane (212) and determining (204) the displaced plane (214) is performed by means of a random sample consensus, RANSAC, algorithm.

5. The computer-implemented method according to any of the preceding claims, further comprising verifying (404) whether the determined initial plane (212) is indicative for the stern of the moored vessel based on the orientation of the normal of the determined initial plane; and/or verifying (407) whether the determined displaced plane (214) is indicative for the stern of the moored vessel based on the orientation of the normal of the determined displaced plane.

6. The computer-implemented method according to claim 5, further comprising rejecting the determined initial plane (212) if it is not indicative for the stern of the moored vessel and determining (421) another initial plane; and/or rejecting the determined displaced plane if it is not indicative for the stern of the moored vessel and determining (423) another displaced plane.

7. The computer-implemented method according to any of the preceding claims, further comprising rejecting (408) the determined displaced plane if it comprises less than a threshold number of data points and determining (424) another displaced plane.

8. The computer-implemented method according to claim 7, further comprising determining (405) the threshold number of data points based on the number of data points associated with the initial plane.

9. The computer-implemented method according to any of the preceding claims, further comprising normalizing (410) the data points of the displaced plane relative to a reference point located on the initial plane.

10. The computer-implemented method according to any of the preceding claims, further comprising transmitting the determined surge motion to a port management system.

11. The computer-implemented method according to any of the preceding claims, further comprising, for successive 3D point cloud frames, repeatedly (207) performing the determining (204) of a displaced plane, the affine transforming (205) of the data points associated with the displaced plane, and the determining (206) of the surge motion.

12. A method for monitoring surge motion of a moored vessel from successive 3D point cloud frames of at least a rear portion of the moored vessel, the method comprising:
- placing a 3D imaging sensor on a wharf at which the vessel is moored such that the 3D imaging sensor is directed to a rear portion of the moored vessel; wherein the 3D imaging sensor is configured to obtain successive 3D point cloud frames; and
- determining, by a control unit, the surge motion of the moored vessel based on the successive 3D point cloud frames obtained by the 3D imaging sensor by performing the computer-implemented method according to any of claims 1-11.

13. A computer program comprising instructions which, when the program is executed by a computer, cause the computer to perform the computer implemented method according to any one of claims 1 to 11.

14. A computer-readable medium comprising instructions which, when executed by a computer, cause the computer to perform the computer implemented method according to any one of claims 1 to 11.

15. A surge motion monitoring device configured to monitor surge motion of a moored vessel from successive 3D point cloud frames of at least a rear portion of the moored vessel, the device comprising:
- a 3D imaging sensor configured to obtain the successive 3D point cloud frames of at least a rear portion of the moored vessel; and
- a control unit configured to perform the computer-implemented method according to any of claims 1 to 11.
